# FASCICULE DE BREVET EUROPEEN

(11) **EP 2 244 804 B1**
(45) Date de publication et mention de la délivrance du brevet: **24.08.2011**
(21) Numéro de dépôt: 08864022.2
(22) Date de dépôt: 18.12.2008
(51) Int. Cl.: B01D 46/24, F01N 3/022, C04B 38/00

(54) **STRUCTURE DE FILTRATION D'UN GAZ A CANAUX HEXAGONAUX ASSYMETRIQUES**
GASFILTERSTRUKTUR MIT ASYMMETRISCHEN HEXAGONALEN KANÄLEN
GAS FILTRATION STRUCTURE WITH ASYMMETRICAL HEXAGONAL CHANNELS

(30) Priorité: 20.12.2007 FR 0760111
(43) Date de publication de la demande: 03.11.2010
(73) Titulaire: Saint-Gobain Centre de Recherches et D'Etudes Europeen, 92400 Courbevoie (FR)
(72) Inventeur: VINCENT, Adrien, F-13440 Cabannes (FR); RODRIGUES, Fabiano, F-84220 Roussillon (FR); LECHEVALIER, David, Cambridge MA 02139 (US)
(74) Mandataire: Lucas, Francois
(86) Numéro de dépôt international: PCT/FR2008/052360
(87) Numéro de publication internationale: WO 2009/081051

(56) Documents cités:
- EP-A- 1 538 133
- WO-A-2005/115589
- WO-A-2007/134897
- DE-U1-202004 013 009
- FR-A- 2 789 327

## Description

L'invention se rapporte au domaine des structures filtrantes comprenant éventuellement une composante catalytique, par exemple utilisées dans une ligne d'échappement d'un moteur à combustion interne du type diesel.

Les filtres permettant le traitement des gaz et l'élimination des suies typiquement issues d'un moteur diesel sont bien connus de l'art antérieur. Ces structures présentent toutes le plus souvent une structure en nid d'abeille, une des faces de la structure permettant l'admission des gaz d'échappement à traiter et l'autre face l'évacuation des gaz d'échappement traités. La structure comporte, entre les faces d'admission et d'évacuation, un ensemble de conduits ou canaux adjacents, le plus souvent de section carrée, d'axes parallèles entre eux séparés par des parois poreuses. Les conduits sont obturés à l'une ou l'autre de leurs extrémités pour délimiter des chambres d'entrée s'ouvrant suivant la face d'admission et des chambres de sortie s'ouvrant suivant la face d'évacuation. Les canaux sont alternativement obturés dans un ordre tel que les gaz d'échappement, au cours de la traversée du corps en nid d'abeille, sont contraints de traverser les parois latérales des canaux d'entrée pour rejoindre les canaux de sortie. De cette manière, les particules ou suies se déposent et s'accumulent sur les parois poreuses du corps filtrant.

A l'heure actuelle, on utilise pour la filtration des gaz des filtres en matière céramique poreuse, par exemple en cordiérite, en alumine, notamment en titanate d'aluminium, en mullite en nitrure de silicium, en un mélange silicium/carbure de silicium ou en carbure de silicium.

De façon connue, durant sa mise en oeuvre, le filtre à particules est soumis à une succession de phases de filtration (accumulation des suies) et de régénération (élimination des suies). Lors des phases de filtration, les particules de suies émises par le moteur sont retenues et se déposent à l'intérieur du filtre. Lors des phases de régénération, les particules de suie sont brûlées à l'intérieur du filtre, afin de lui restituer ses propriétés de filtration. La structure poreuse est alors soumise à des contraintes thermo-mécaniques radiales et tangentielles intenses, qui peuvent entraîner des micro-fissurations susceptibles sur la durée d'entraîner une perte sévère des capacités de filtration de l'unité, voire sa désactivation complète. Ce phénomène est particulièrement observé sur des filtres monolithiques de grand diamètre.

Pour résoudre ces problèmes et augmenter la durée de vie des filtres, il a été proposé plus récemment des structures de filtration associant plusieurs blocs ou éléments unitaires monolithiques en nid d'abeille. Les éléments sont le plus souvent assemblés entre eux par collage au moyen d'une colle ou d'un ciment de nature céramique, appelés dans la suite de la description ciment de joint. Des exemples de telles structures filtrantes sont par exemple décrits dans les demandes de brevets EP 816 065, EP 1 142 619, EP 1 455 923, WO 2004/090294 ou encore WO 2005/063462. Afin d'assurer une relaxation optimale des contraintes dans une telle structure assemblée, il est connu que les coefficients de dilatation thermique des différentes parties de la structure (éléments de filtration, ciment de revêtement, ciment de joint) doivent être sensiblement du même ordre. De ce fait, lesdites parties sont avantageusement synthétisées sur la base d'un même matériau, le plus souvent le carbure de silicium SiC ou la cordiérite. Ce choix permet en outre d'homogénéiser la répartition de la chaleur lors de la régénération du filtre.

Afin d'obtenir les meilleurs performances de résistance thermo mécanique et de perte de charge, les filtres assemblés actuellement commercialisés pour les véhicules légers comportent typiquement environ 10 à 20 éléments unitaires présentant, selon une coupe transversale, une section carrée ou rectangulaire et dont la surface élémentaire en coupe est comprise entre environ 13 cm² et environ 25 cm². Ces éléments sont constitués d'une pluralité de canaux de section le plus souvent carrée. Pour réduire encore la masse du filtre sans réduire ses performances en termes de perte de charge et de stockage en suies, une solution évidente pourrait être de diminuer le nombre d'éléments unitaires dans l'assemblage en augmentant leur taille individuelle. Une telle augmentation n'est cependant pas possible actuellement, en particulier avec des filtres en SiC, sans diminuer de façon inacceptable la résistance thermomécanique du filtre.

Les filtres de plus grande section, actuellement utilisés notamment pour les applications de type «camion», sont réalisés par assemblage au moyen d'un ciment de jointoiement d'éléments de taille similaire à ceux constituant les filtres destinés aux véhicules légers. Le nombre d'éléments unitaires de type de filtre camions est alors très élevé et peut comporter jusqu'à 30 voire 80 éléments. De tels filtres présentent alors une masse globale et une perte de charge trop élevée.

De manière générale, il existe donc à l'heure actuelle un besoin visant à augmenter conjointement les performances

Le document WO 2007/134897 A décrit des structures de filtration en nid d'abeille avec sorties à forme d'hexagone régulier entourées d'entrées à forme d'hexagone irrégulier.

globales de filtration et la durée de vie des filtres actuels.

Plus précisément, l'amélioration des filtres peut être directement mesurée par la comparaison des propriétés qui suivent, le meilleur compromis possible entre ces propriétés étant recherché selon l'invention, pour des régimes moteurs équivalents. En particulier, l'objet de la présente invention est un filtre ou un élément de filtre présentant tout à la fois:
- une faible perte de charge occasionnée par une structure filtrante en fonctionnement, c'est-à-dire typiquement lorsque celle-ci est dans une ligne d'échappement d'un moteur à combustion interne, aussi bien lorsque que ladite structure est exempte de particules de suies (perte de charge initiale) que lorsqu'elle est chargée en particules,
- une augmentation de la perte de charge du filtre au cours dudit fonctionnement la plus faible possible, c'est à dire un faible accroissement de la perte de charge en fonction du temps d'utilisation ou plus exactement en fonction du niveau de chargement en suies du filtre,
- une surface totale de filtration élevée,
- une masse de l'élément monolithique adaptée pour assurer une masse thermique suffisante pour minimiser la température maximale de régénération et les gradients thermiques subis par le filtre qui peuvent eux-mêmes entraîner des fissures sur l'élément
- un volume de stockage de suies important, notamment à perte de charge constante, de manière à réduire la fréquence de régénération,
- une résistance thermomécanique forte, c'est-à-dire permettant une durée de vie prolongée du filtre,
- un volume de stockage des résidus plus important.

L'augmentation de la perte de charge en fonction du niveau de chargement en suies du filtre est notamment directement mesurable par la pente de chargement ΔP/Mₛᵤᵢₑₛ, dans lequel ΔP représente la perte de charge et Mₛᵤᵢₑₛ la masse de suie accumulée dans le filtre.

De manière à améliorer l'une ou l'autre des propriétés précédemment décrites, il a déjà été proposé dans l'art antérieur de modifier la forme des canaux de la structure filtrante de différentes marnières :

Par exemple, pour augmenter à volume de filtre constant, la surface de filtration dudit filtre, il a été proposé, dans la demande de brevet WO 05/016491, des éléments filtrants dont la forme et le volume interne des canaux d'entrée et de sortie sont différents. Dans de telles structures, les éléments de paroi se succèdent, en coupe transversale et en suivant un rang horizontal et/ou vertical de canaux, pour définir une forme sinusoïdale ou en vague (wavy en anglais). Les éléments de paroi ondulent typiquement d'une demi période de sinusoïde sur la largeur d'un canal. De telles configurations de canaux permettent d'obtenir une perte de charge faible et un volume de stockage de suies important. Ce type de structure présente cependant une perte de charge initiale combinée à une pente de chargement en suie trop élevées et les filtres réalisés avec ce type de configuration de canaux ne permettent donc pas de répondre à l'ensemble des besoins définis précédemment.

Selon une autre configuration, le brevet US 4417908 propose des cellules ou canaux de section hexagonale, un canal d'entrée étant entouré de six canaux de sortie (voir notamment la figure 11). Le volume de stockage en suies de telles structures reste cependant encore globalement faible.

Alternativement, on connaît de la demande EP 1 538 133 des configurations de cellules hexagonales asymétriques, permettant une augmentation du volume de stockage des suies et des résidus par rapport aux structures avec canaux à section carrée, à densité de canaux et épaisseur de parois constantes. Cependant, la configuration décrite en figure 14 induit un volume de stockage des résidus trop faible, ainsi qu'une forte pente de chargement, la surface de filtration restant faible. En outre cette configuration des canaux entraîne une masse du filtre trop élevée. Lors du fonctionnement du filtre, les expériences menées par le déposant ont montré qu'une quantité de résidus potentiellement stockable par ledit filtre plus importante, lorsque celui-ci est placé dans une ligne d'échappement d'un moteur à combustion interne, se traduit au final par une durée de vie sensiblement prolongée du filtre.

On voit ainsi que si chacune des configurations de l'art antérieur permet d'améliorer au moins une des propriétés recherchées, aucune des solutions décrites ne fournit cependant un compromis acceptable entre l'ensemble des propriétés recherchées, telles que précédemment exposées. En général, on peut remarquer que, pour chacune des configurations de l'art antérieur, l'amélioration obtenue pour l'une des propriétés du filtre est accompagnée de la détérioration conjointe d'une autre, de telle sorte que l'amélioration finalement obtenue est généralement mineure au regard des inconvénients induits.

La présente invention a ainsi pour but de fournir une structure filtrante présentant le meilleur compromis entre la perte de charge induite, la pente de chargement ΔP/Mₛᵤᵢₑₛ, la masse, la surface totale de filtration, le volume de stockage des suies et des résidus et la résistance thermomécanique, tel que précédemment décrit. Dans sa forme la plus générale, la présente invention se rapporte à une structure de filtration de gaz chargés en particules, du type en nid d'abeilles et comprenant un ensemble de canaux adjacents longitudinaux d'axes parallèles entre eux séparés par des parois poreuses filtrantes, lesdits canaux étant alternativement bouchés à l'une ou l'autre des extrémités de la structure de façon à définir des canaux d'entrée et des canaux de sortie pour le gaz à filtrer, et de façon à forcer ledit gaz à traverser les parois poreuses séparant les canaux d'entrée et de sortie, ladite structure se caractérisant en ce que
- chaque canal de sortie présente une paroi commune avec six canaux d'entrée, chaque paroi commune constituant un coté dudit canal de sortie,
- chaque canal de sortie est constitué de six cotés de largeur a sensiblement identique, de façon à former un canal de section sensiblement hexagonale et régulière,
- au moins deux cotés adjacents de chaque canal d'entrée présentent une largeur différente,
- au moins deux canaux d'entrée, partageant une paroi avec un même canal de sortie, partagent entre eux une paroi commune de largeur b,
- le rapport des largeurs b/a est supérieur à 0 et inférieur à 1.

De préférence, le rapport des largeurs b/a est compris entre 0,1 et 0,95 de préférence entre 0,2 et 0,9 et de manière très préférée entre 0,3 et 0,85.

Selon un mode possible, les parois constituant les canaux d'entrée et de sortie sont planes.

Selon un mode alternatif, les parois constituant les canaux d'entrée et de sortie sont ondulées, c'est-à-dire qu'elles présentent, en coupe transversale et par rapport au centre d'un canal, au moins une concavité ou au moins une convexité.

Les canaux de sortie peuvent présenter des parois convexes par rapport au centre desdits canaux. Sans sortir du cadre de l'invention, les canaux de sortie peuvent également présenter des parois concaves par rapport au centre desdits canaux.

De préférence, la paroi commune de largeur b entre deux canaux d'entrée est plane.

Selon ce mode alternatif, la distance maximale, selon une coupe transversale, entre un point extrême de la ou les parois concave et/ou convexe et le segment de droite reliant les deux extrémités de ladite paroi est supérieur à 0 et inférieur à 0,5 a.

Les structures de filtration selon l'invention présentent une densité des canaux comprise entre environ 1 et environ 280 canaux par cm² et de préférence comprise entre 15 et 40 canaux par cm².

L'épaisseur moyenne des parois est comprise entre 100 et 1000 microns, et de préférence comprise entre 150 et 450 microns.

Dans les structures de filtration selon l'invention, la largeur a des canaux de sortie est typiquement comprise entre environ 0,10mm et environ 4,00mm, et de préférence comprise entre environ 0,20mm et environ 2,50mm.

Dans les structures de filtration selon l'invention, la largeur b de la paroi commune entre deux canaux d'entrée est typiquement comprise entre environ 0,05mm et environ 4,00mm, et de préférence comprise entre environ 0,20mm et environ 1,00mm.
Selon un mode de réalisation, les parois sont à base de carbure de silicium SiC.

L'invention se rapporte en particulier à un filtre assemblé comprenant une pluralité de structures filtrantes telles que précédemment décrites, lesdites structures étant liées entre elles par un ciment.

L'invention se rapporte en outre à l'utilisation d'une structure de filtration ou d'un filtre assemblé tels que précédemment décrits comme dispositif de dépollution sur une ligne d'échappement d'un moteur Diesel ou Essence de préférence Diesel.
Les figures 1, 2 et 3 illustrent deux exemples de réalisation non limitatifs d'une structure filtrante présentant une configuration des canaux selon l'invention.
La figure 1 est une vue de face en élévation d'une portion de la face avant d'un filtre selon une première réalisation selon l'invention, comprenant des canaux d'entrée et de sortie à six parois et dans laquelle lesdites parois sont planes.
La figure 2 est une vue de face en élévation d'une portion de la face avant d'un filtre selon une seconde réalisation selon l'invention, comprenant des canaux d'entrée et de sortie à six parois et dans laquelle lesdites parois sont ondulées. Selon ce mode, un canal de sortie est constitué de parois convexes par rapport à son centre dudit canal.
La figure 3 illustre plus en détail le mode déjà décrit en relation avec la figure 2.

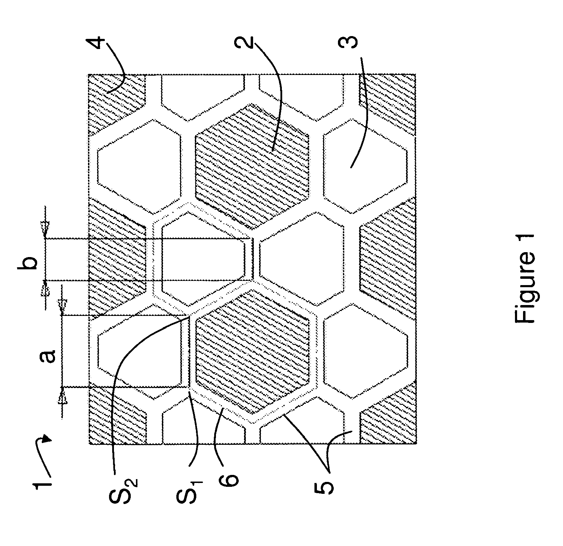

Sur la figure 1, on a représenté une vue en élévation de la face d'entrée des gaz d'un morceau de l'unité de filtration monolithique 1. L'unité présente des canaux d'entrée 3 et des canaux de sortie 2. Les canaux de sortie sont classiquement obstrués sur la face d'entrée des gaz par des bouchons 4. Les canaux d'entrée sont également bouchés mais sur la face opposée (arrière) du filtre, de manière à ce que les gaz à purifier soient forcés de traverser les parois poreuses 5. La structure filtrante selon l'invention est caractérisée par la présence d'un canal de sortie 2 de forme générale hexagonale et régulière, c'est-à-dire que ses 6 cotés sont d'une longueur sensiblement identique a et que deux cotés adjacents forment un angle proche de 120°. Un canal de sortie régulier 2 est en contact avec 6 canaux d'entrée 3 d'une forme générale également hexagonale mais irrégulière, c'est-à-dire formés par des parois adjacentes dont au moins deux présentent une largueur différente, selon une coupe transversale.

Les canaux d'entrée présentent selon l'invention une paroi commune de longueur b.

Les structures selon l'invention sont caractérisées en ce que le rapport b/a est supérieur à 0 et strictement inférieur à 1.

Tel que représentées sur les vues en coupe transversale ci-jointes (figures 1 à 3), les distances a et b sont définies selon l'invention comme les distances reliant les deux sommets S1 et S2 de la paroi considérée, lesdits sommets S1 et S2 s'inscrivant sur l'âme centrale 6 de ladite paroi (cf. figure 1 et suivantes). On obtient ainsi des valeurs de a et de b indépendantes de l'épaisseur des parois. De préférence l'épaisseur des parois est constante selon invention dans toute la longueur et l'épaisseur du filtre.

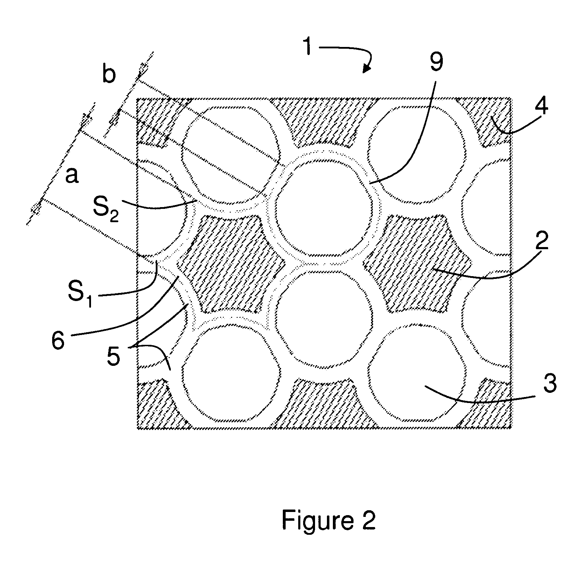

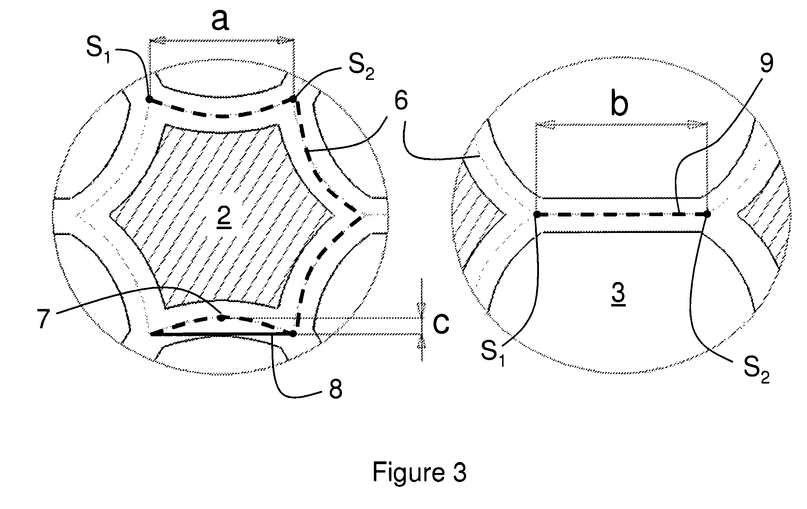

La figure 2 représente l'agencement d'un ensemble de canaux de sortie 2 et d'entrée 3 des gaz selon une vue en élévation de la face d'entrée des gaz à purifier dans une structure en nid d'abeille selon l'invention, et dont les parois sont ondulées. Les canaux de sortie sont constitués de parois convexes par rapport à leur centre. Au sein de cette structure et tel que représenté sur la figure 3, on définit la distance maximale c, selon une coupe transversale, comme la distance entre le point extrême 7 d'une paroi ondulée et le segment de droite 8 reliant les deux extrémités S1 et S2 de ladite paroi.

Pour les modes de réalisation selon l'invention dans lequel les parois sont ondulées, concaves ou convexes, la distance c est supérieur à 0 et inférieur à 0,5 a (0,5 x a). De préférence, ce rapport est supérieur à 0,01 a et de manière très préférée, supérieur à 0,03 a, voire même supérieur à 0,05 a. De préférence, ce rapport est inférieur à 0,30 a et de manière très préférée inférieur à 0,20 a.

Selon un mode possible, deux parois (droite ou ondulées) à 60° d'un canal d'entrée sont de largueur égale dans une structure selon l'invention. Selon un mode possible, deux parois adjacentes d'un canal d'entrée d'une structure selon l'invention sont de largeur différentes.

L'invention et ses avantages par rapport aux structures déjà connues seront mieux compris à la lecture des exemples non limitatifs qui suivent.

### Exemple 1 :

On a synthétisé selon les techniques de l'art, par exemple décrites dans les brevets EP 816065, EP 1 142 619, EP 1 455 923 ou encore WO 2004/090294, une première population d'éléments monolithiques ou monolithes en forme de nid d'abeille et en carbure de silicium.

Pour ce faire, on mélange dans un malaxeur :
- 3000 g d'un mélange de particules ou grains de carbure de silicium de pureté supérieure à 98% et composé de deux fractions granulométriques. Une première fraction présente un diamètre médian d₅₀ compris entre 5 µm et 50 µm, au moins 10% en masse des grains composant cette fraction présentent un diamètre supérieur à 5 µm. La deuxième fraction présente un diamètre médian des grains inférieur à 5 µm. Au sens de la présente description, le diamètre médian désigne le diamètre des particules au dessous duquel se trouve 50% en masse de la population des particules.
- 150 g d'un liant organique du type cellulose.

On ajoute de l'eau et on malaxe jusqu'à obtenir une pâte homogène dont la plasticité permet l'extrusion, la filière étant configurée pour l'obtention de blocs monolithes de section carrée et dont les canaux internes présentent également une section transversale de forme carrée, tel qu'actuellement commercialisés.

Les monolithes crus obtenus sont séchés par micro-onde pendant un temps suffisant pour amener la teneur en eau non liée chimiquement à moins de 1% en masse.

Les canaux de chaque face du monolithe sont alternativement bouchés selon des techniques bien connues, par exemple décrites dans la demande WO 2004/065088.

Les monolithes (éléments) sont ensuite cuits jusqu'à une température supérieure à 2100°C qui est maintenue pendant 5 heures. Le matériau poreux obtenu, présente une porosité ouverte de 39% et un diamètre moyen de distribution de pores de l'ordre de 15µm. Les caractéristiques dimensionnelles des éléments ainsi obtenus sont données dans le tableau 1 ci-après, la structure présentant une périodicité, c'est à dire une distance entre 2 canaux adjacents, de 1,89mm.

On a ensuite formé un filtre assemblé à partir des monolithes. Seize éléments issus d'un même mélange ont été assemblés entre eux selon les techniques classiques par collage au moyen d'un ciment de composition chimique suivante : 72% poids de SiC, 15% poids d'Al₂O₃, 11% poids de SiO₂, le reste étant constitué par des impuretés majoritairement de Fe₂O₃ et d'oxydes de métaux alcalins et alcalino-terreux. L'épaisseur moyenne du joint entre deux blocs voisins est de l'ordre de 1 à 2 mm. L'ensemble est ensuite usiné, afin de constituer des filtres assemblés de forme cylindrique d'environ 14,4 cm de diamètre.

### Exemple 2 :

La technique de synthèse des monolithes décrite précédemment est également reprise à l'identique, mais la filière est cette fois adaptée de manière à réaliser des blocs monolithes se caractérisant par une disposition en vague des canaux internes. Des monolithes conformes à ceux décrits en relation avec la figure 3 de la demande WO 05/016491 sont obtenus. Selon une coupe transversale, l'ondulation des parois est caractérisée par un taux d'asymétrie, tel que défini dans la demande WO 05/016491, égal à 11%. Les caractéristiques dimensionnelles des éléments ainsi obtenus sont données dans le tableau 1 ci-après, la structure présentant une périodicité, c'est à dire une distance entre deux canaux adjacents, de 1,95mm.

### Exemple 3 :

La technique de synthèse des monolithes décrite précédemment est également reprise à l'identique, mais la filière est cette fois-ci adaptée de manière à réaliser des blocs monolithes se caractérisant par une disposition octogonale des canaux internes d'entrée (souvent appelée structure carrée/octogonale dans le domaine) telle qu'illustrée par la figure 6b de la demande EP 1 495 791. Les caractéristiques dimensionnelles des éléments ainsi obtenus sont données dans le tableau 1 ci-après la structure présentant une périodicité, c'est à dire une distance entre deux canaux adjacents, de 2,02mm.

### Exemple 4 :

La technique de synthèse décrite précédemment est également reprise à l'identique, mais la filière est cette fois-ci adaptée de manière à réaliser des blocs monolithes se caractérisant par une disposition des canaux internes d'entrée et de sortie de section transversale de forme hexagonale régulière et formés par des parois planes, conformément à l'enseignement de la figure 11 du brevet US 4417908 de Corning. Les paramètres de la structure à canaux hexagonaux réguliers ainsi obtenue sont a = b = 1,45 mm.

### Exemple 5 :

La technique de synthèse des monolithes décrite précédemment est également reprise à l'identique, mais la filière est cette fois-ci adaptée de manière à réaliser des blocs monolithes se caractérisant par une disposition hexagonale des canaux internes d'entrée telle qu'illustrée par la figure 14 de la demande de brevet EP 1 538 133 avec les paramètres a et b suivants :
a = 1,45 mm
b = 0,76 mm
b/a = 0,52

### Exemple 6 (selon l'invention) :

La technique de synthèse des monolithes décrite précédemment est également reprise à l'identique, mais la filière est cette fois-ci adaptée de manière à réaliser des blocs monolithes se caractérisant par une disposition des canaux internes selon la figure 1 tel que précédemment décrit, avec des parois planes. La disposition des canaux est caractérisée par les valeurs suivantes :
a = 1,45 mm
b = 0,76 mm
b/a = 0,52

### Exemple 7 (selon l'invention):

La technique de synthèse des monolithes décrite précédemment est également reprise à l'identique, mais la filière est cette fois-ci adaptée de manière à réaliser des blocs monolithes se caractérisant par une disposition des canaux internes selon l'invention et conforme à la représentation donnée sur la figure 2, c'est-à-dire avec des parois ondulées. La disposition des canaux est caractérisée par les valeurs suivantes :
a = 1,45 mm
b = 0,76 mm
b/a = 0,52
c = 0,20 mm soit 0,14a

Les principales caractéristiques structurelles des éléments obtenus selon les exemples 1 à 7 sont reportées dans le tableau 1 ci-dessous. La technique d'assemblage et d'obtention des filtres est la même pour tous les exemples et telle que décrite dans l'exemple 1.

**Tableau 1**

| Exemples | 1 | 2 | 3 | 4 | 5 | 6 | 7 |
|---|---|---|---|---|---|---|---|
| Géométrie des canaux | carrée | wavy | carrée/ octogonale | Hexa. reg | Hexa assym. EP1538133 | Selon invention (parois planes) | Selon invention (parois ondulées) |
| Tailles des éléments monolithes (mm) | 36 | 36 | 36 | 36 | 36 | 36 | 36 |
| Paramètre a (mm) | - | - | - | 1,45 | 1,45 | 1,45 | 1,45 |
| Longueur des éléments (cm) | 20,32 | 20,32 | 20,32 | 20,32 | 20,32 | 20,32 | 20,32 |
| Epaisseur e des parois internes (µm) | 380 | 340 | 390 | 300 | 300 | 300 | 300 |
| Ratio : canaux entrée / canaux sortie | 1/1 | 1/1 | 1/1 | 2/1 | 2/1 | 2/1 | 2/1 |

Les échantillons obtenus ont été évalués et caractérisés selon les modes opératoires suivants:
A- Mesure de perte de charge à l'état chargé ou non et de la pente de chargement:
   Par perte de charge, on entend au sens de la présente invention la pression différentielle existant entre l'amont et l'aval du filtre. La perte de charge a été mesurée selon les techniques de l'art, pour un débit de gaz de 250 kg/h et une température de 250°C, dans un premier temps sur les filtres neufs.
      Pour la mesure de perte sur filtre chargé, les différents filtres sont préalablement montés sur une ligne d'échappement d'un moteur diesel 2.0 L mis en marche à pleine puissance (4000 tr/minutes) pendant 30 minutes puis démontés et pesés afin de déterminer leur masse initiale. Les filtres sont ensuite remontés sur banc moteur avec un régime à 3000 tr/min et un couple de 50 Nm afin d'obtenir des charges en suies dans le filtre de 7 g/l. La mesure de perte de charge sur le filtre ainsi chargé en suies est réalisée comme sur le filtre neuf. On mesure aussi la perte de charge en fonction de différents taux de chargements compris entre 0 et 10 gramme/litre afin d'établir la pente de chargement ΔP/mₛᵤᵢₑ.
B- Mesure de la résistance thermomécanique :
   Les filtres sont montés sur une ligne d'échappement d'un moteur 2.0 L diesel à injection directe mis en marche à pleine puissance (4000 tr/minutes) pendant 30 minutes puis démontés et pesés afin de déterminer leur masse initiale.
   Les filtres sont ensuite remontés sur banc moteur avec un régime à 3000 tr/min et un couple de 50 Nm pendant des durées différentes afin d'obtenir une charges en suies de 8 g/litre (en volume du filtre). Les filtres ainsi chargés sont remontés sur la ligne pour subir une régénération sévère ainsi définie : après une stabilisation à un régime moteur de 1700 tours/minute pour un couple de 95 Nm pendant 2 minutes, une post-injection est réalisée avec 70° de phasage pour un débit de post injection de 18mm³/coup. Une fois la combustion des suies initiée, plus précisément lorsque la perte de charge diminue pendant au moins 4 secondes, le régime du moteur est abaissé à 1050 tours/minute pour un couple de 40 Nm pendant 5 minutes afin d'accélérer la combustion des suies. Le filtre est ensuite soumis à un régime moteur de 4000 tours/minute pendant 30 minutes afin d'éliminer les suies restantes.

Les filtres régénérés sont inspectés après découpe pour révéler la présence éventuelle de fissures visibles à l'oeil nu. La résistance thermomécanique du filtre est appréciée au vu du nombre de fissures, un nombre faible de fissures traduisant une résistance thermomécanique acceptable pour une utilisation comme filtre à particules.

Tel que reporté dans le tableau 2, on a attribué les notes suivantes à chacun des filtres :
+++ : présence de très nombreuses fissures,
++ : présence de nombreuses fissures,
+ : présence de quelques fissures,
- : pas de fissures ou rares fissures.

Le volume de stockage des résidus et la surface de filtration ont été déterminés, pour chaque filtre, selon les techniques habituelles bien connues dans le domaine. Les résultats obtenus aux tests pour l'ensemble des exemples 1 à 7 sont regroupés dans le tableau 2 qui suit :

**Tableau 2**

| Exemples | 1 | 2 | 3 | 4 | 5 | 6 | 7 |
|---|---|---|---|---|---|---|---|
| Géométrie des canaux | carrée | wavy | carré/ octogonale | Hexa. reg | Hexa assym. EP1538133 | Selon invention (parois planes) | Selon invention (parois ondulées) |
| Surface de filtration [m²/m³] | 844 | 913 | 911 | 896 | 603 | 968 | 1060 |
| Masse du filtre [grammes] | 2627 | 2394 | 2448 | 1967 | 2237 | 2102 | 2156 |
| Volume de stockage en résidus [cm³] | 648 | 977 | 967 | 1026 | 678 | 758 | 1029 |
| Perte de charge ΔP₀ [mBar] à l'état neuf ou non chargé en suies | 29 | 34,5 | 39 | 30 | 28 | 22 | 33 |
| Perte de charge ΔP₀ [mBar] à l'état chargé en suies (7 gr/L) | 165 | 110 | 118 | 119 | 157 | 95 | 104 |
| Pente de chargement [Pa/grₛᵤᵢₑ/L_{filtre}] | 19,4 | 10,8 | 11,3 | 12,7 | 18,9 | 10,4 | 10,1 |
| Présence de fissures après chargement en suie de 8g/L et régénération sévère | +++ | ++ | ++ | + | + | - | - |

### Analyse des résultats:

Les résultats reportés dans le tableau 2 montrent que les filtres selon les exemples 6 et 7 présentent le meilleur compromis entre les différentes propriétés recherchées dans une application comme filtre à particules dans une ligne d'échappement automobile.

Les filtres selon les exemples 6 et 7 présentent en outre une résistance thermomécanique améliorée par rapport aux filtres selon l'art antérieur.

Plus particulièrement, du fait de ce meilleur compromis, il devient possible selon l'invention de synthétiser des structures assemblées à partir d'éléments monolithiques de plus grande taille qu'auparavant, tout en lui garantissant une durée de vie supérieure.

## Revendications

1. Structure de filtration de gaz chargés en particules, du type en nid d'abeilles et comprenant un ensemble de canaux adjacents longitudinaux d'axes parallèles entre eux séparés par des parois poreuses filtrantes, lesdits canaux étant alternativement bouchés à l'une ou l'autre des extrémités de la structure de façon à définir des canaux d'entrée (3) et des canaux de sortie (2) pour le gaz à filtrer, et de façon à forcer ledit gaz à traverser les parois poreuses (5) séparant les canaux d'entrée (3) et de sortie (2), ladite structure **se caractérisant en ce que** :
i. chaque canal de sortie présente une paroi commune avec six canaux d'entrée, chaque paroi commune constituant un coté dudit canal de sortie,
ii. chaque canal de sortie est constitué de six cotés de largeur a sensiblement identique, de façon à former un canal de section sensiblement hexagonale et régulière,
iii. au moins deux cotés adjacents de chaque canal d'entrée présentent une largeur différente,
iv. au moins deux canaux d'entrée, partageant une paroi avec un même canal de sortie, partagent entre eux une paroi commune de largeur b,
v. le rapport des largeurs b/a est supérieur à 0 et inférieur à 1.

2. Structure de filtration selon la revendication 1, dans laquelle le rapport des largeurs b/a est compris entre 0,1 et 0,95, de préférence entre 0,2 et 0,9 et de manière très préférée entre 0,3 et 0,85.

3. Structure de filtration selon les revendications 1 ou 2, dans laquelle les parois constituant les canaux d'entrée et de sortie sont planes.

4. Structure de filtration selon la revendication 1 ou 2, dans laquelle les parois constituant les canaux d'entrée et de sortie sont ondulées, c'est-à-dire qu'elles présentent, en coupe transversale et par rapport au centre d'un canal, au moins une concavité ou au moins une convexité.

5. Structure de filtration selon la revendication 4, dans laquelle les canaux de sortie présentent des parois convexes par rapport au centre desdits canaux.

6. Structure de filtration selon la revendication 4, dans laquelle les canaux de sortie présentent des parois concaves par rapport au centre desdits canaux.

7. Structure de filtration selon la revendication 4 à 6, dans laquelle la paroi commune de largeur b entre deux canaux d'entrée est plane.

8. Structure de filtration selon l'une des revendications 4 à 7, dans laquelle la distance maximale, selon une coupe transversale, entre un point extrême (7) de la ou les paroi concave et/ou convexe et le segment de droite (8) reliant les deux extrémités (S1, S2) de ladite paroi est supérieur à 0 et inférieur à 0,5 a.

9. Structure de filtration selon l'une des revendications précédentes, dans laquelle la densité des canaux est comprise entre environ 1 et environ 280 canaux par cm² et de préférence comprise entre 15 et 40 canaux par cm².

10. Structure de filtration selon l'une des revendications précédentes, dans laquelle l'épaisseur moyenne des parois est comprise de préférence entre 100 et 1000 microns, de préférence comprise entre 150 et 450 microns.

11. Structure de filtration selon l'une des revendications précédentes, dans laquelle la largeur a des canaux de sortie est comprise entre environ 0,1mm et environ 4,00mm, et de préférence comprise entre environ 0,20mm et environ 2,50mm.

12. Structure de filtration selon l'une des revendications précédentes, dans laquelle la largeur b de la paroi commune entre deux canaux d'entrée est comprise entre environ 0,05mm et environ 4,00mm, et de préférence comprise entre environ 0,20mm et environ 1,00mm.

13. Structure selon l'une des revendications précédentes, dans laquelle les parois sont à base de carbure de silicium SiC.

14. Filtre assemblé comprenant une pluralité de structures filtrantes selon l'une des revendications précédentes, lesdites structures étant liées entre elles par un ciment.

15. Utilisation d'une structure de filtration ou d'un filtre assemblé selon l'une des revendications précédentes comme dispositif de dépollution sur une ligne d'échappement d'un moteur Diesel ou Essence de préférence Diesel.

## Claims

1. A gas filter structure for filtering particulate-laden gases, of the honeycomb type and comprising an assembly of longitudinal adjacent channels of mutually parallel axes separated by porous filtering walls, said channels being alternately blocked off at one or the other of the ends of the structure so as to define inlet channels (3) and outlet channels (2) for the gas to be filtered and so as to force said gas to pass through the porous walls (5) separating the inlet (3) and outlet (2) channels, said structure being **characterized in that**:
i. each outlet channel has a wall common to six inlet walls, each common wall constituting one side of said outlet channel;
ii. each outlet channel consists of six sides of approximately identical width a, so as to form a channel of approximately hexagonal and regular cross section;
iii. at least two adjacent sides of each inlet channel have a different width;
iv. at least two inlet channels sharing a wall with one and the same outlet channel share between them a common wall of width b; and
v. the ratio of the widths b/a is greater than 0 but less than 1.

2. The filter structure as claimed in claim 1, in which the ratio of the widths b/a is between 0.1 and 0.95, preferably between 0.2 and 0.9 and very highly preferably, between 0.3 and 0.85.

3. The filter structure as claimed in claims 1 or 2, in which the walls constituting the inlet or outlet channels are plane.

4. The filter structure as claimed in claim 1 or 2, in which the walls constituting the inlet and outlet channels are wavy, that is to say that, in cross section and with respect to the center of a channel, they have at least one concave portion or at least one convex portion.

5. The filter structure as claimed in claim 4, in which the outlet channels have walls that are convex with respect to the center of said channels.

6. The filter structure as claimed in claim 4, in which the outlet channels have walls which are concave with respect to the center of said channels.

7. The filter structure as claimed in claims 4 to 6, in which the common wall of width b between two inlet channels is plane.

8. The filter structure as claimed in one of claims 4 to 7, in which the maximum distance, along a cross section, between an extreme point (7) of the concave and/or convex wall or walls and the straight segment (8) connecting the two ends (S1, S2) of said wall is greater than 0 and less than 0.5a.

9. The filter structure as claimed in one of the preceding claims, in which the density of the channels is between about 1 and about 280 channels per cm² and preferably between 15 and 40 channels per cm².

10. The filter structure as claimed in one of the preceding claims, in which the average wall thickness is preferably between 100 and 1000 microns, preferably between 150 and 450 microns.

11. The filter structure as claimed in one of the preceding claims, in which the width a of the outlet channels is between about 0.1 mm and about 4.00 mm and preferably between about 0.20 mm and about 2.50 mm.

12. The filter structure as claimed in one of the preceding claims, in which the width b of the wall common to two inlet channels is between about 0.05 mm and about 4.00 mm, and preferably between about 0.20 mm and about 1.00 mm.

13. The structure as claimed in one of the preceding claims, in which the walls are based on silicon carbide SiC.

14. An assembled filter comprising a plurality of filtering structures as claimed in one of the preceding claims, said structures being bonded together by a cement.

15. The use of a filter structure or of an assembled filter as claimed in one of the preceding claims as a pollution control device on an exhaust line of a diesel or gasoline engine, preferably a diesel engine.

## Patentansprüche

1. Struktur zum Filtrieren von partikelbeladenen Gasen, d.h. Bienenneststruktur und aufweisend einen Aufbau von benachbart mit zueinander parallelen Achsen angeordneten Längskanälen, die durch filtrierende poröse Wände getrennt sind, wobei die gesagten Kanäle an dem einen beziehungsweise dem anderen Ende der Struktur abwechselnd gestopft werden, um für das zu filtrierende Gas Einlasskanäle (3) und Auslasskanäle (2) zu definieren, und um das Gase durch die die Einlass- (3) und Auslasskanäle (2) trennend porösen Wände (5) hindurchzuzwingen, wobei die gesagte Struktur durch die folgenden Merkmale **gekennzeichnet** ist:
i. jeder Auslasskanal weist eine mit sechs Einlasskanälen gemeinsame Wand auf, wobei jede gemeinsame Wand eine Seite des gesagten Auslasskanals bildet,
ii. jeder Auslasskanal besteht aus sechs Seiten mit einer im wesentlichen identischen Breite a, um einen Kanal mit einem im wesentlichen hexagonalen und gleichmässigen Querschnitt zu bilden,
iii. mindestens zwei benachbarte Seiten jedes Zulaufkanals weisen eine unterschiedliche Breite auf,
iv. mindestens zwei Einlasskanäle, die eine Wand mit einem selben Auslasskanal teilen, auch teilen eine gemeinsame Wand mit einer Breite b zusammen,
v. das Verhältnis der Breiten b/a ist größer als 0 und kleiner als 1.

2. Filtrierstruktur nach Anspruch 1, worin das Verhältnis der Breiten b/a zwischen 0,1 und 0,95 liegt, vorzugsweise zwischen 0,2 und 0,9 und besonders bevorzugt zwischen 0,3 und 0,85.

3. Filtrierstruktur nach den Ansprüchen 1 oder 2, in welcher die die Ein- und Auslasskanäle bildenden Wände eben sind.

4. Filtrierstruktur nach Anspruch 1 oder 2, in welcher die die Ein- und Auslasskanäle bildenden Wände gewellt sind, d.h. sie besitzen, im Querschnitt gesehen und gegenüber dem Zentrum eines Kanals, wenigstens eine Konkavität beziehungsweise wenigstens eine Konvexität.

5. Filtrierstruktur nach Anspruch 4, in welcher die Auslasskanäle Wände aufweisen, die gegenüber dem Zentrum der gesagten Kanäle konvex sind.

6. Filtrierstruktur nach Anspruch 4, in welcher die Auslasskanäle Wände aufweisen, die gegenüber dem Zentrum der gesagten Kanäle konkav sind.

7. Filtrierstruktur nach Anspruch 4 bis 6, in welcher die gemeinsame Wand mit Breite b zwischen zwei Einlasskanälen eben ist.

8. Filtrierstruktur gemäß einem der Ansprüche 4 bis 7, in welcher der maximale Abstand, im Querschnitt gesehen, zwischen einem Endpunkt (7) der konkaven und/oder konvexen Wände und dem die beiden Ende (S1, S2) der gesagten Wand verbindenden Liniensegment (8) größer als 0 und kleiner als 0,5 ist.

9. Filtrierstruktur gemäß nach einem der vorgenannten Ansprüche, in welcher die Kanaldichte zwischen ungefähr 1 und ungefähr 280 Kanälen pro zm² liegt und vorzugsweise zwischen 15 und 40 Kanälen pro zm².

10. Filtrierstruktur gemäß nach einem der vorgenannten Ansprüche, in welcher die durchschnittliche Wanddicke vorzugsweise zwischen 100 und 1000 Mikronen liegt, vorzugsweise zwischen 150 und 450 Mikronen.

11. Filtrierstruktur gemäß nach einem der vorgenannten Ansprüche, in welcher die Breite a der Auslasskanäle zwischen ungefähr 0,1mm und ungefähr 4,00mm liegt, und vorzugsweise zwischen 0,20mm und 2,50mm.

12. Filtrierstruktur gemäß nach einem der vorgenannten Ansprüche, in welcher die Breite b der gemeinsamen Wand zwischen zwei Einlasskanälen zwischen ungefähr 0,05mm und ungefähr 4,00mm liegt, und vorzugsweise zwischen 0,20mm und 1,00mm.

13. Struktur nach einem der vorgenannten Ansprüche, in welcher die Wände auf Siliziumkarbid SiC basiert sind.

14. Zusammengebauter Filter umfassend eine Vielzahl von filtrierenden Strukturen nach einem der vorgenannten Ansprüche, wobei die gesagten Strukturen durch ein Zement zueinander verbunden sind.

15. Verwendung einer Filtrierstruktur oder eines zusammengebauten Filters nach einem der vorgenannten Ansprüche als Vorrichtung zur Beseitigung von Schadstoffen an einer Abgasleitung eines Diesel- oder Benzinmotors, vorzugsweise eines Dieselmotors.
